# EUROPÄISCHE PATENTSCHRIFT

(11) **EP 3 068 643 B1**
(45) Veröffentlichungstag und Bekanntmachung des Hinweises auf die Patenterteilung: **16.05.2018**
(21) Anmeldenummer: 14796708.7
(22) Anmeldetag: 07.11.2014
(51) Int. Cl.: B60G 17/018, B60G 17/0165

(54) **VERFAHREN ZUM KONTROLLIEREN EINES AKTORS**
METHOD FOR CONTROLLING AN ACTUATOR
PROCÉDÉ DE CONTRÔLE D'UN ACTIONNEUR

(30) Priorität: 13.11.2013 DE 102013018923
(43) Veröffentlichungstag der Anmeldung: 21.09.2016
(73) Patentinhaber: Audi AG, 85045 Ingolstadt (DE)
(72) Erfinder: GÖHRLE, Christoph, 85049 Ingolstadt (DE); SCHINDLER, Andreas, 85055 Ingolstadt (DE); UNGER, Andreas, 85080 Gaimersheim (DE); SAWODNY, Oliver, 70186 Stuttgart (DE)
(74) Vertreter: Reichert, Thomas Klaus
(86) Internationale Anmeldenummer: PCT/EP2014/002982
(87) Internationale Veröffentlichungsnummer: WO 2015/070962

(56) Entgegenhaltungen:
- EP-A1- 0 412 719
- DE-A1-102008 007 657
- US-A- 4 685 698
- US-A- 5 848 663
- US-A1- 2010 049 394

## Beschreibung

Die Erfindung betrifft ein Verfahren und ein System zum Kontrollieren von mindestens einem Aktor eines Fahrwerks eines Kraftfahrzeugs.
Ein Kraftfahrzeug kann mehrere Sensoren und Aktoren aufweisen. Dabei ist jeweils ein Sensor dazu ausgebildet, Werte von Messgrößen, die für einen Betrieb des Kraftfahrzeugs relevant sind, zu erfassen. Die sensorisch erfassten Werte sind üblicherweise von einem Steuergerät des Kraftfahrzeugs zu verarbeiten. Auf Grundlage dieser Werte werden von dem Steuergerät Stellsignale für einen Aktor bereitgestellt, mit dem eine Komponente des Kraftfahrzeugs zu beaufschlagen ist.

Die Druckschrift US 2010/049394 A1, die den Oberbegriff des Anspruchs 1 bzw. 6 offenbart, beschreibt eine Vorrichtung und ein Verfahren zur Beeinflussung einer Federkraftcharakteristik eines aktiven Fahrwerks eines Kraftfahrzeugs. Hierbei wird eine Vorhersagegröße ermittelt, die ein Höhenprofil einer in Fahrtrichtung des Kraftfahrzeugs vorausliegenden Fahrstrecke wiedergibt. Außerdem wird die Federkraftcharakteristik einer Radfedereinrichtung des aktiven Fahrwerks in Abhängigkeit der ermittelten Vorhersagegröße vorausschauend an den Verlauf des erfassten Höhenprofils der in Fahrtrichtung des Kraftfahrzeugs vorausliegenden Fahrstrecke angepasst. Außerdem werden Sensordaten zu einer Beschaffenheit der vorausliegenden Fahrstrecke erfasst und hinsichtlich der Frequenz gefiltert.
Aus der Druckschrift DE 10 2008 007 657 A1 sind ein Verfahren und eine Vorrichtung zur Beeinflussung eines aktiven Fahrwerks eines Fahrzeugs bekannt. Hierbei wird ein in Fahrtrichtung vor dem Fahrzeug befindliches Fahrbahnhöhenprofil ermittelt. Weiterhin wird aus dem Fahrbahnhöhenprofil in einem Filterschritt mit Hilfe einer Filtervorschrift ein gefiltertes Höhenprofil gebildet.
Vor diesem Hintergrund werden ein Verfahren und ein System mit den Merkmalen der unabhängigen Patentansprüche vorgestellt. Weitere Ausgestaltungen der Erfindung gehen aus den abhängigen Patentansprüchen und der Beschreibung hervor.

Das erfindungsgemäße Verfahren ist zum Kontrollieren von mindestens einem Aktor eines Fahrwerks eines Kraftfahrzeugs vorgesehen. Dabei werden von mindestens einem Sensor des Kraftfahrzeugs Werte von mindestens einer Messgröße zum Erfassen eines Umfelds des Kraftfahrzeugs ermittelt. Die ermittelten Werte werden vorverarbeitet. Weiterhin werden bei einer Vorverarbeitung der Werte unter anderem nur jene zum Kontrollieren des mindestens einen Aktors benötigten Werte ermittelt. Lediglich jene Werte, die zum Kontrollieren des mindestens einen Aktors benötigt werden bzw. erforderlich sind, werden von einem sensorzugeordneten Kontrollgerät an ein aktorzugeordnetes Kontrollgerät übermittelt. Außerdem werden lediglich die zum Kontrollieren des mindestens einen Aktors vorgesehenen Werte von dem aktorzugeordneten Kontrollgerät zeitlich gefiltert. Von dem aktorzugeordneten Kontrollgerät werden aus den zunächst vorverarbeiteten und danach zeitlich gefilterten Werten Stellsignale für den mindestens einen Aktor bereitgestellt. Dabei werden die von dem mindestens einen Sensor ermittelten Werte in einem ersten zeitlichen Takt verarbeitet und von dem sensorzugeordneten Kontrollgerät in einem zweiten zeitlichen Takt an das aktorzugeordnete Kontrollgerät übermittelt werden, wobei der zweite zeitliche Takt schneller als der erste zeitlichen Takt ist.

Üblicherweise wird das Umfeld bzw. eine Umgebung des Kraftfahrzeugs von dem mindestens einen Sensor unter Nutzung elektromagnetischer Wellen, bspw. laserbasiert, videobasiert und/oder radarbasiert ermittelt. Hierbei wird ein Höhenprofil eines Untergrunds, in der Regel einer Straße, die von dem Kraftfahrzeug befahren wird, erfasst. Dieses erfasste Höhenprofil kann bei einer im Rahmen des Verfahrens vorgesehenen Vorverarbeitung ausgewertet werden. Dies kann auch die Maßnahme umfassen, die zum Erfassen des Höhenprofils sensorisch ermittelten Werte örtlich zu filtern, bspw. durch eine Vorwärts-Rückwärts-Filterung oder durch einen gleitend gewichteten Mittelwert. Zusätzlich werden üblicherweise Unebenheiten des Untergrunds erkannt, wobei derartige Unebenheiten mittels verschiedener Verfahren bestimmt werden. Lediglich Werte zu derartigen Unebenheiten, die eine weitere Fahrt eines Kraftfahrzeugs beeinflussen, werden zur Kontrolle des mindestens einen Aktors benötigt und verwendet. Über die derart ausgewählten und/oder extrahierten Werte kann der mindestens eine Aktor vorausschauend angesteuert und/oder aktiviert werden. In Ausgestaltung kann bei einer vergleichsweise hohen Unebenheit entlang des Höhenprofils des Untergrunds darüber entschieden werden, dass ein Aufbau des Kraftfahrzeugs entlang einer zukünftig zu befahrenden Strecke, entlang der die hohe Unebenheit angeordnet ist, angehoben wird, wodurch dem zumindest einen Aktor eine längere Strecke zum Anziehen eines Rads bereitgestellt wird. In Ausgestaltung werden lediglich jene Werte zum Kontrollieren des mindestens einen Aktors ausgewählt, die Informationen über eine beschriebene vergleichsweise hohe Unebenheit entlang des Untergrunds umfassen.

Weiterhin werden die von dem mindestens einen Sensor ermittelten Werte von dem sensorzugeordneten Kontrollgerät vorverarbeitet und dabei bspw. örtlich gefiltert. Weiterhin werden nur bestimmte Werte aus dem Höhenprofil aus den örtlich gefilterten Werten ausgewählt und übertragen. Alternativ oder ergänzend werden die von dem mindestens einen Sensor ermittelten Werte von dem mindestens einen Sensor vorverarbeitet und dabei bspw. örtlich gefiltert oder vorgefiltert. Bei einer Vorverarbeitung der ermittelten Werte durch das sensorzugeordnete Kontrollgerät und/oder den mindestens einen Sensor können u. a. auch lediglich jene Werte aus sämtlichen ermittelten Werten ausgewählt bzw. extrahiert werden, die die von den Rädern möglicherweise zu überfahrende Straße darstellen. Demnach kann eine Vorverarbeitung, bspw. örtliche Filterung und/oder Auswahl, der zu verwendenden Sensorinformationen in einem ersten Schritt von dem mindestens einen Sensor und in einem zweiten Schritt von dem sensorzugeordneten Kontrollgerät durchgeführt werden. Dabei kann eine von dem mindestens einen Sensor durchgeführte, ggf. grobe Vorverarbeitung der Werte nachfolgend von dem sensorbezogenen Kontrollgerät durch eine genauere Vorverarbeitung verfeinert werden. In Ausgestaltung umfasst die Vorverarbeitung eine örtliche Filterung und/oder eine Erkennung von Unebenheiten, die zum Kontrollieren des mindestens einen Aktors zu berücksichtigen sind. Die örtliche Filterung umfasst eine phasenfreie Hoch- oder Tiefpassfilterung mit Vorwärts-Rückwärts-Filterung oder einer Filterung mit einem gleitenden Mittelwert (moving average filter).

Nach der Vorverarbeitung der sensorisch ermittelten Werte werden demnach lediglich jene Werte ausgewählt, die das Höhenprofil des Untergrunds, in der Regel Werte von Unebenheiten entlang des Untergrunds, beschreiben und für das Kontrollieren des Aktors nötig sind. Hierbei können Unebenheiten identifiziert werden, die auf einer von einem Rad des Kraftfahrzeugs zu befahrenden Strecke des Untergrunds liegen und durch ein Lenkmanöver überfahren werden können. Eine derartige Auswahl kann durch ein Kontrollgerät, das als eine Komponente des mindestens einen Sensors ausgebildet ist, oder durch ein dem beschriebenen Sensor zugeordnetes Kontrollgerät durchgeführt werden. Weiterhin können zu dem Umfeld des Kraftfahrzeugs von verschiedenen Sensoren erfasste Werte auf dem sensorzugeordneten Kontrollgerät fusioniert und das Höhenprofil des Untergrunds durch Akkumulation, bspw. Mittelwertbildung, dieser Werte bereitgestellt werden. Ein über die ermittelten Werte bereitgestelltes Höhenprofil wird auf dem sensorzugeordneten Kontrollgerät vorverarbeitet und dabei bspw. örtlich gefiltert. Alternativ oder ergänzend können bei dieser Vorverarbeitung Unebenheiten entlang des Untergrunds erkannt werden. Lediglich die für den mindestens einen Aktor zu dessen Kontrolle erforderlichen Werte werden in einem nachfolgend beschriebenen, schnellen Takt an das aktorzugeordnete Kontrollgerät übermittelt.

In Ausgestaltung werden bei mindestens einer Vorverarbeitung aus den ermittelten Werten der mindestens einen Messgröße jene Werte ausgewählt, die das Höhenprofil des von dem Kraftfahrzeug befahrenen Untergrunds betreffen und für die Kontrolle des Aktors nötig sind.

Bei dem Verfahren werden die von dem mindestens einen Sensor ermittelten Werte in einem ersten zeitlichen Takt verarbeitet bzw. vorverarbeitet, wobei eine derartige Verarbeitung der Werte deren Vorverarbeitung, u. a. deren örtliche Filterung, durch das sensorzugeordnete Kontrollgerät und/oder durch den mindestens einen Sensor umfasst. Diese vorverarbeiteten und damit bspw. örtlich gefilterten Werte werden von dem sensorzugeordneten Kontrollgerät in einem zweiten zeitlichen Takt an das aktorzugeordnete Kontrollgerät übermittelt, wobei der zweite zeitliche Takt schneller als der erste zeitlichen Takt ist.

Das erfindungsgemäße System ist zum Kontrollieren von mindestens einem Aktor eines Fahrwerks eines Kraftfahrzeugs ausgebildet und umfasst ein sensorzu geordnetes Kontrollgerät und ein aktorzugeordnetes Kontrollgerät. Hierbei sind von mindestens einem Sensor des Kraftfahrzeugs Werte von mindestens einer Messgröße zum Erfassen eines Umfelds des Kraftfahrzeugs zu ermitteln, wobei die ermittelten Werte vorzuverarbeiten sind. Weiterhin sind nur jene sensorisch ermittelten Werte, die zum Kontrollieren des mindestens einen Aktors benötigt werden von dem sensorzugeordneten Kontrollgerät an das aktorzugeordnete Kontrollgerät zu übermitteln und von dem aktorzugeordneten Kontrollgerät zeitlich zu filtern. Von dem aktorzugeordneten Kontrollgerät sind aus den zeitlich gefilterten Werten Stellsignale für den mindestens einen Aktor bereitzustellen. Hierbei sind die von dem mindestens einen Sensor ermittelten Werte in einem ersten zeitlichen Takt zu verarbeiten und von dem sensorzugeordneten Kontrollgerät in einem zweiten zeitlichen Takt an das aktorzugeordnete Kontrollgerät zu übermitteln, wobei der zweite zeitliche Takt schneller als der erste zeitlichen Takt ist.

Bei einer Vorverarbeitung werden die sensorisch ermittelten Werte hochpassgefiltert und/oder tiefpassgefiltert, so dass diese phasenfrei sind. Dies kann eine örtliche Vorwärts-Rückwärts-Filterung mit einem FIR-Filter (finit impulse response Filter), der auch als Transversalfilter mit endlicher Impulsantwort bezeichnet werden kann und/oder mit einem IIR-Filter (infinit impulse response Filter) mit unendlicher Impulsantwort durchgeführt werden. Alternativ oder ergänzend kann bei der Vorverarbeitung ein örtlich gewichteter gleitender Mittelwert (moving average) mit einer Gewichtungsfunktion zur Verarbeitung der ermittelten Werte verwendet werden, was üblicherweise einer Faltung mit einer zu definierenden Funktion als Gewichtungsfunktion entspricht.

Das sensorzugeordnete Kontrollgerät ist dazu ausgebildet, die von dem mindestens einen Sensor ermittelten Werte im Rahmen einer Verarbeitung dieser Werte örtlich zu filtern.

Als weitere Komponente kann das System noch den mindestens einen Sensor aufweisen, der dazu ausgebildet ist, Werte der mindestens einen Messgröße zu dem Umfeld des Kraftfahrzeugs zu erfassen. Der mindestens eine Sensor ist dazu ausgebildet, Werte für ein Höhenprofil als die mindestens eine Messgröße eines von dem Kraftfahrzeug befahrenen, üblicherweise als Straße ausgebildeten Untergrunds zu erfassen.

Außerdem weist das System eine Kommunikationsverbindung auf, über die das sensorzugeordnete Kontrollgerät und das aktorzugeordnete Kontrollgerät zur Übermittlung der vorverarbeiteten Werte miteinander verbunden sind. Im Rahmen der Vorverarbeitung bspw. einer durchgeführten örtlichen Filterung wird eine Vielzahl von ermittelten Werten, die das Höhenprofil entlang eines Abschnitts von mehreren äquidistanten oder nicht-äquidistanten Stützstellen beschreiben, vorverarbeitet. Nach der Vorverarbeitung werden einige wenige Werte ausgewählt. Diese wenigen Werte werden zu dem aktorzugeordneten Kontrollgerät gesendet, das aus diesen Werten eine Stellgröße für den mindestens einen Aktor berechnet.

Mit dem System wird eine modulare Kontrollstruktur, d. h. eine modulare Regelungs- und/oder Steuerungsstruktur, für den mindestens einen Aktor und somit für das Kraftfahrzeug bereitgestellt. Das System umfasst das erste sensorzugeordnete Kontrollgerät, das Sensoren zugeordnet und mit diesen verbunden ist und auch als erstes, sensornahes Kontrollgerät bezeichnet werden kann. Die von den Sensoren ermittelten Werte und somit Rohdaten von Messgrößen werden an das sensorzugeordnete Kontrollgerät gesendet. Das aktorzugeordnete Kontrollgerät, das auch als zweites, fahrwerks- und/oder aktornahes Kontrollgerät bezeichnet werden kann, ist dem Fahrwerk und somit Aktoren des Fahrwerks zugeordnet, wobei dieses zweite Kontrollgerät dazu ausgebildet ist, als Stellsignale ausgebildete Signale an die Aktoren zum Beaufschlagen des Fahrwerks und somit der Räder des Kraftfahrzeugs zu senden. Es kann noch ein weiteres, den Aktoren zugeordnetes Steuergerät vorgesehen sein, das über Stellsignale vorgegebene Stellgrößen in einen Aktor einregelt.

Durch Aufteilung einer Regelung auf zwei Kontrollgeräte ist eine vorausschauende Regelung des Fahrwerks möglich. Ein Teil der Regelung wird bei der Verarbeitung der Werte von dem sensorzugeordneten Kontrollgerät berechnet, um eine geringe Menge an Werten von Daten über die Kommunikationsverbindung, bspw. einen Bus, zu schicken, wobei sich für die zu übertragenden, vergleichsweise wenigen Werte nur eine geringere Latenz bzw. Verzögerung ergibt. Demnach kann das sensorzugeordnete aber auch das aktorzugeordnete Kontrollgerät schneller auf Informationen der Sensoren reagieren und hat somit eine vergleichsweise große nutzbare Vorausschauweite.

Mit einer derartigen Vorausschauweite wird jener Abschnitt des von dem Kraftfahrzeug zu befahrenden Untergrunds berücksichtigt, der für die Ansteuerung des Aktors verwendet werden kann. Dabei bleibt die Vorausschauweite des Sensors üblicherweise unverändert. Bei Ausführung des vorgestellten Verfahrens werden jene vorverarbeiteten Werte, die zur eigentlichen Kontrolle des mindestens einen Aktors vorgesehen sind, dem aktorzugeordneten Kontrollgerät unter geringer Verzögerung bereitgestellt, so dass das aktorzugeordnete Kontrollgerät den mindestens einen Aktor zeitnah kontrollieren, üblicherweise regeln kann. Eine vorausschaubare Strecke in Metern bleibt gleich, da ein Blickwinkel und eine Sensorposition konstant sind. Die nutzbare Vorausschauweite hängt jedoch von der Geschwindigkeit des Kraftfahrzeugs ab. Da nur eine geringe Anzahl von Werten berücksichtigt und unter dem schnellen Takt an das aktorzugeordnete Kontrollgerät übermittelt werden, ist die Vorausschau über den Untergrund nur einer geringen zeitlichen Verzögerung unterworfen, so dass das Kraftfahrzeug auch mit höheren Geschwindigkeiten fahren kann und dennoch genügend Werte für eine hinreichend lange Strecke des zu befahrenden Untergrunds bzw. zu dessen Höhenprofil zur Verfügung stehen. Hierbei wird auch berücksichtigt, dass Werte des Höhenprofils des Untergrunds, die aus einem geringeren Abstand sensorisch ermittelt werden, genauer sind. Weiterhin können auch diese genaueren Werte nach der Vorverarbeitung, wobei lediglich die für den Aktor relevanten Werte ermittelt werden, auch von dem aktorzugeordneten Kontrollgerät zum Beaufschlagen des mindestens einen Aktors verwendet werden.

Für die vorausschauende Regelung des Fahrwerks werden Einzelmodule zur Durchführung der Regelung auf die beiden Kontrollgeräte verteilt. Bei dem ersten, sensorzugeordneten Kontrollgerät gehen als Werte Rohdaten der Sensoren ein. Bei diesen Rohdaten kann es sich um eine große Anzahl Daten handeln, die u. a. Entfernungsmessungen zum Untergrund bzw. zur Straße oder allgemein Entfernungsmessungen zu Objekten im Umfeld des Kraftfahrzeugs betreffen, die sich jeweils im Blickfeld eines der Sensoren befinden.

Bei einem bspw. als Kamera ausgebildeten Sensor werden in regelmäßigen Zeitintervallen von bspw. 40 ms bei einem videobasierten System mehrere tausend Werte für eine Entfernung zu dem Untergrund, der von den Rädern überfahrenen wird, ermittelt. Bei einem als Laser ausgebildeten Sensor werden zu jeder zu einem Zeitpunkt durchgeführten Messung Daten zu einer Pulslaufzeitmessung eines vom Sensor ausgesendeten Strahls sowie verschiedene Informationen zu Entfernungen bereitgestellt.

Weiterhin kann bereits direkt von dem mindestens einen Sensor in einem ersten Vorverarbeitungsschritt darüber entschieden werden, welche gemessenen Entfernungen zu einer von dem Kraftfahrzeug befahrenen Straße und welche zu einem Objekt, z. B. einem anderen Kraftfahrzeug oder einem Baum, gehören. Aufgrund einer von dem Sensor getroffenen Entscheidung werden nur Werte für eine Entfernung zwischen dem Sensor und der Straße zum ersten, sensorzugeordneten Kontrollgerät gesendet. Alternativ werden von dem Sensor sämtliche Werte ohne Verarbeitung an das erste Kontrollgerät gesendet, das in einem ersten Schritt der Vorverarbeitung darüber entscheidet, welche gemessenen Werte Entfernungen zur Straße und somit zum befahrenen Untergrund und welche Werte Entfernungen zu anderen Objekten betreffen.

Über die Werte der Sensoren wird eine genaue Eigenbewegung des Kraftfahrzeugs bestimmt. Daten bzw. Werte mehrerer, verschiedener Sensoren werden fusioniert, d. h. vereinigt, und daraus resultierende Informationen zeitlich gemittelt, um ein genaueres Höhenprofil des Untergrunds und/oder der Straße zu erhalten.

Das System verwendet hierbei ein Höhenprofil, das sich bspw. über einen Abschnitt der Straße zwischen zwei Positionen x1 bis x2 erstreckt, wobei bspw. x1 = -20 m und x2 = 20 m ist. Dabei ist bspw. eine als Referenz vorgesehene Position x0 einer Vorderachse und somit einem Vorderrad des Kraftfahrzeugs zugeordnet. Ein Sensor erfasst in Ausgestaltung die Straße vorausschauend bis zur zweiten Position x2. Informationen, die das Höhenprofil der Straße bis zur ersten Position x1 umfassen, und die das Kraftfahrzeug während der Fahrt bereits hinter sich gelassen hat, werden aus vorhergehend erfassten und bereits gespeicherten Werten ermittelt.

Aus gespeicherten Werten sowie aus den örtlich und zeitlich gefilterten Werten mit Informationen zum Höhenprofil der Straße werden Stellsignale ermittelt, die mindestens an Aktoren zum Beaufschlagen der beiden als Vorderräder ausgebildeten Räder und ggf. auch an Aktoren für die als Hinterräder ausgebildeten Räder übermittelt werden. Dabei können die Daten ebenfalls zu regelmäßig aufeinander folgenden Zeitpunkten, die durch konstante Zeitintervalle voneinander beabstandet sind, übermittelt werden. Ein durch ein Zeitintervall definierter Takt, in dem die Sensoren neue Werte liefern, ist mit z. B. 40 ms vergleichsweise langsam und an die Länge jenes Zeitintervalls anzupassen, während dem von den Sensoren neue Werte bereitgestellt werden. Die als Stellsignale ausgebildeten Daten werden an die Aktoren innerhalb eines Zeitintervalls übermittelt, das kürzer als jenes Zeitintervall sein kann, während dem von den Sensoren Werte ermittelt werden. Dies bedeutet, dass die Werte zu dem Umfeld des Kraftfahrzeugs von dem mindestens einen Sensor durch Messen in dem zweiten, langsam zeitlichen Takt erfasst werden. Dagegen werden Daten zum Beaufschlagen des mindestens einen Aktors von dem aktorzugeordneten Kontrollgerät in dem zweiten, schnelleren Takt verarbeitet und an den mindestens einen Aktor vermittelt. Dies betrifft Werte zum Beschreiben des Höhenprofils des Untergrunds, das von Rädem des Kraftfahrzeugs demnächst überfahren wird. Durch Fusion der Werte mehrerer Sensoren kann auch ein schnellerer Takt zum Erstellen der Höhenwerte realisiert werden, da die Sensoren üblicherweise zu unterschiedlichen Zeitpunkten mit den ermittelten Werten neue Informationen bereitstellen und weiterleiten. Der zweite, schnellere Takt, mit dem ein Aktor angesteuert wird, ist in Ausgestaltung immer gleich, wobei nur die passenden und/oder benötigten Werte extrahiert und/oder interpoliert werden.

In Ausgestaltung der Erfindung wird mit dem System direkt danach durch Bearbeitung der Werte ein Verlauf des Höhenprofils der Straße ermittelt. Hierbei wird durch eine örtliche Filterung und/oder Erkennung ermittelt, ob entlang des Höhenprofils eine definierte Unebenheit vorhanden ist, d. h. ob im Rahmen einer Ungenauigkeit der Sensoren eine unebene, nicht glatte Straße vorliegt. Zum Beschreiben des Höhenprofils wird eine konstante Anzahl an Werten zu dem zweiten, aktorzugeordneten Kontrollgerät gesendet. Hierbei werden immer Werte gesendet, die gegebenenfalls Null sein können. Falls keine Unebenheit entlang des Untergrunds erkannt wird, werden die Werte auf Null gesetzt.

Unabhängig von einer konkreten Ausführung des Verfahrens werden in einem schnellen Takt wenige Werte gesendet, z. B. für jedes Rad ein Wert für eine Höhe und ein Wert für deren erste Ableitung oder für jedes Vorderrad ein Wert für die Höhe und deren erste Ableitung, wobei für die Hinterräder von dem zweiten Kontrollgerät dieselben wenigen Werte für die Höhe und deren erste Ableitung zeitlich verschoben bereitgestellt werden. Ferner können auch Werte von weiteren Ableitungen, bspw. von der zweiten Ableitung, berücksichtigt werden. Außerdem werden die Werte von dem zweiten Kontrollgerät zeitlich gefiltert, da von dem zweiten Kontrollgerät in einem schnelleren Takt gerechnet wird, der z. B. über ein Zeitintervall von 2,5 ms definiert ist, und Daten in einem durch ein Zeitintervall von z. B. 5 ms definierten Takt übertragen werden, so dass in diesem Fall Werte bzw. Daten in einem Takt von 2,5 ms zeitlich gefiltert werden.

Vor der zeitlichen Filterung können Werte mit einem gröberen Signal über die Kommunikationsverbindung übertragen werden, die dadurch weniger belastet wird, wodurch eine geringe Latenz bzw. Verzögerung erzielt wird.

Bei einer Plausibilisierung des sensorisch erfassten Höhenprofils wird dieses verifiziert, indem überprüft wird, ob die im Kraftfahrzeug auftretenden Beschleunigungen und/oder Radeinfederungen zu diesem Höhenprofil passen. Hierbei wird aus den Beschleunigungen und/oder Radeinfederungen ein überfahrenes Höhenprofil unter dem Rad geschätzt und mit dem von den Sensoren zum Erfassen des Umfelds gemessenen Werten des Höhenprofils verglichen. Eine derartige Plausibilisierung wird mit dem zweiten, aktorzugeordneten Kontrollgerät durchgeführt, in dem gemessene Werte für eine Radfederung, für Aufbaubeschleunigungen, für Aufbaudrehraten sowie für eine Geschwindigkeit des Kraftfahrzeugs direkt vorliegen.

Üblicherweise wird das Höhenprofils des zu befahrenden Untergrunds aufgrund von Messgrößen des Kraftfahrzeugs plausibilisiert. Dabei wird berücksichtigt, dass das Höhenprofil zur vorausschauenden Regelung des mindestens einen Aktors fehlerhaft sein kann, was durch Ungenauigkeiten eines Sensors aber auch durch äußere Bedingungen, bspw. Wetter- und/oder Witterungsbedingungen, sowie von einer Helligkeit (Tag oder Nacht) abhängig sein kann.

Im Rahmen der durchzuführenden Plausibilisierung des Höheprofils werden üblicherweise kinematische Größen des Kraftfahrzeugs, die ebenfalls sensorisch erfasst werden, bspw. eine Geschwindigkeit oder eine Beschleunigung des Kraftfahrzeugs, eine Radeinfederung eines Rad des Kraftfahrzeugs, eine Beschleunigung eines Aufbaus des Kraftfahrzeugs oder eine Drehrate des Aufbaus des Kraftfahrzeugs zum Plausibilisieren des Höhenprofils berücksichtigt. Dieses auf kinematischen Größen beruhende Höhenprofil wird mit jenem Höhenprofil verglichen, das von den Sensoren zum Erfassen des Umfelds bereitgestellt wird. Falls sich im Rahmen der Plausibilisierung ergibt, dass die durch unterschiedliche Sensoren erfassten Profile nicht zueinander passen, kann eine vorgesehene Regelung des mindestens einen Aktors zurückgefahren oder abgeschaltet werden.

Ein Vergleich der Höhenprofile wird für eine gewisse Zeitspanne, die sich zwischen einem Zeitpunkt aus der Vergangenheit und einem aktuellen, gegenwärtigen Zeitpunkt erstreckt, durchgeführt. Hierbei kann auch ein Gütemaß über eine Korrespondenz der Höhenprofile, eine Kooperationsfunktion oder eine Differenz der beiden Höhenprofile berücksichtigt werden. Eine Schätzung des Höhenprofils auf Grundlage von kinematischen Größen des Kraftfahrzeugs kann modellbasiert durchgeführt werden, wobei ein Viertel-, Halb- oder Gesamtmodell für eine vertikale Dynamik des Kraftfahrzeugs berücksichtigt werden. Dabei kann ein Zustand dieses Modells zu einem nächsten Zeitpunkt vorhergesagt und über die gemessenen kinematischen Größen korrigiert werden. Hierbei wird das Höhenprofil als ein Zustand von dynamischen Gleichungen formuliert. In einer weiteren Ausgestaltung wird kein Modell des Kraftfahrzeugs verwendet. Zum Schätzen des Höhenprofils werden sensorisch ermittelte Werte bspw. hochpassgefiltert und einmal integriert, wodurch aus einer vertikalen Beschleunigung eines Aufbaus des Kraftfahrzeugs über dem Rad der von dem Aufbau zurückgelegte vertikale Weg berechnet werden kann. Dieser vertikal orientierte Weg abzüglich eines Wegs für eine Radeinfederung ergibt das Höhenprofil unter dem jeweiligen Rad des Kraftfahrzeugs.
Weitere Vorteile und Ausgestaltungen der Erfindung ergeben sich aus der Beschreibung und der beiliegenden Zeichnung.

Die Erfindung ist anhand einer Ausführungsform in der Zeichnung schematisch dargestellt und wird unter Bezugnahme auf die Zeichnung schematisch und ausführlich beschrieben.

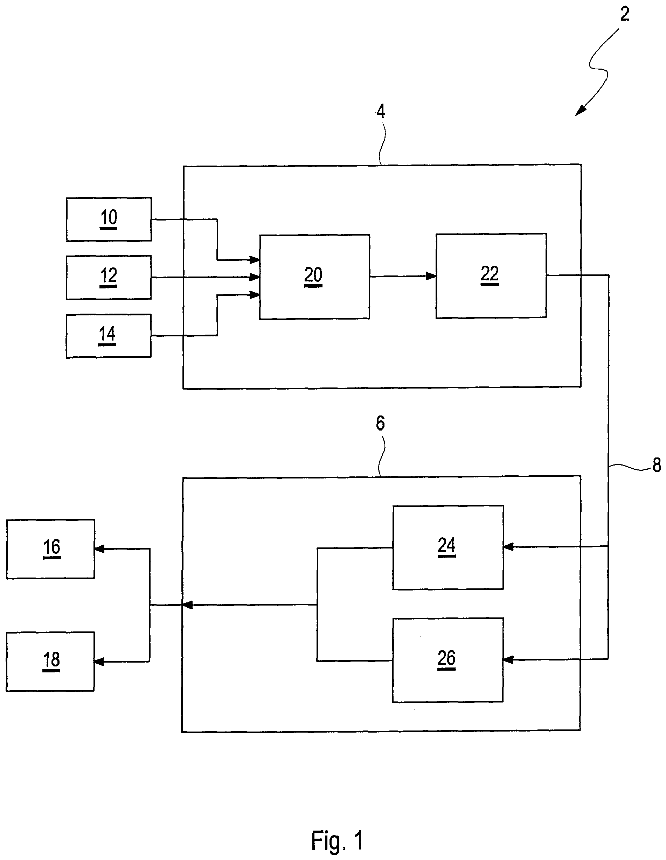

Figur 1 zeigt in schematischer Darstellung eine Ausführungsform eines erfindungsgemäßen Systems.
Figur 1 zeigt in schematischer Darstellung die Ausführungsform des erfindungsgemäßen Systems 2, das als Komponenten wenigstens ein erstes, sensorzugeordnetes Kontrollgerät 4 sowie ein zweites, aktorzugeordnetes Kontrollgerät 6 aufweist, die hier über eine Kommunikationsverbindung 8 miteinander verbunden sind. Diese beiden Kontrollgeräte 4, 6 sind dazu ausgebildet, mindestens einen Schritt des von dem System 2 durchzuführenden erfindungsgemäßen Verfahrens zu kontrollieren und somit zu steuern und/oder zu regeln, weshalb zumindest eines dieser beiden Kontrollgeräte 4, 6 auch als Steuergerät bezeichnet werden kann.

Figur 1 zeigt außerdem mehrere Sensoren, nämlich einen ersten Sensor 10, einen zweiten Sensor 12 und einen n-ten Sensor 14, sowie einen ersten Aktor 16 und einen weiteren, n-ten Aktor 18. Dabei können die beschriebenen Sensoren 10, 12, 14 und/oder Aktoren 16, 18, auch als Komponenten des Systems 2 ausgebildet sein. Die hier dargestellten Aktoren 16, 18 sind hier einem Fahrwerk und somit Rädern eines Kraftfahrzeugs zugeordnet.

Die ebenfalls dem Kraftfahrzeug zugeordneten Sensoren 10, 12, 14 sind dazu ausgebildet, ein Umfeld bzw. eine Umgebung des Kraftfahrzeugs unter Nutzung elektromagnetischer Wellen, bspw. videobasiert, laserbasiert und/oder radarbasiert, zu erfassen. Dabei werden in der beschriebenen Ausführungsform Werte der Sensoren 10, 12, 14, die mindestens eine Messgröße zum Umfeld des Kraftfahrzeugs betreffen, direkt an das erste Kontrollgerät 4 übermittelt. Diese Werte werden von dem sensorzugeordneten Kontrollgerät 4 in einem Verarbeitungsmodul 20 fusioniert, wobei Werte von mehreren Sensoren 10, 12, 14 miteinander verknüpft sowie akkumuliert und somit bspw. gemittelt werden. Die derart verarbeiteten Werte werden weiterhin in einem ersten, langsamen Takt von bspw. 40 ms an eine Verarbeitungseinheit 22 des ersten Kontrollgeräts 4 übermittelt, wobei diese erste Verarbeitungseinheit 22 dazu ausgebildet ist, bei einer Vorverarbeitung die von den Sensoren 10, 12, 14 ermittelten Werte vorzuverarbeiten, d. h. örtlich zu filtern, evtl. Unebenheiten zu erkennen und danach jene Werte auszuwählen, die zum Kontrollieren des mindestens einen Aktors 16, 18 benötigt werden.

Diese vorverarbeiteten und ausgewählten Werte, die innerhalb eines Zeitintervalls ermittelt wurden, werden von dem ersten Kontrollgerät 4 über die Kommunikationsverbindung 8 in einem zweiten, schnellen Takt z. B. alle 5 ms an das zweite Kontrollgerät übermittelt. Somit werden nur vorverarbeitete Werte des Höhenprofils zu einer bestimmten Position des Untergrunds vor dem Kraftfahrzeug übermittelt.

Das zweite Kontrollgerät 6 umfasst eine zweite Regelungseinrichtung 24 sowie eine Plausibilisierungseinrichtung 26. Dabei ist die zweite Regelungseinrichtung 24 dazu ausgebildet, die bereits örtlich gefilterten Werte zeitlich zu filtern und dabei auf Grundlage dieser örtlich und zeitlich gefilterten Werte Stellsignale für mindestens einen der Aktoren 16, 18 zu berechnen. Die Plausibilisierungseinrichtung 26 ist dazu ausgebildet, die örtlich gefilterten übermittelten Werte zu plausibilisieren.

Bei Durchführung des erfindungsgemäßen Verfahrens wird über die Kommunikationsverbindung 8 zwischen den beiden Kontrollgeräten 4, 6 im schnellen Takt nur eine vergleichsweise geringe Menge an Werten für das Höhenprofil und/oder für eine direkte Ansteuerung der Aktoren 16, 18 übermittelt, wohingegen im ersten Kontrollgerät 4 unter Nutzung des langsamen Takts eine wesentlich größere Menge an Werten der Sensoren 10, 12, 14 verarbeitet wird.

Somit können Ressourcen der Kommunikationsverbindung 8 geschont und zu einem Zeitpunkt sämtliche, bereits örtlich gefilterten Werte in einem Paket übermittelt werden, was nicht möglich wäre, wenn die Anzahl der zu übermittelnden Werte zu groß ist, wobei eine größere Anzahl von Werten ggf. auf mehrere Pakete verteilt und zu mehreren Zeitpunkten nacheinander übertragen werden müsste. Bei Durchführung des Verfahrens können die Pakete mit den wenigen ausgewählten örtlich gefilterten Werten im zweiten Takt schnell und vollständig übermittelt werden. Somit können der zweiten Regelungseinrichtung 24 im zweiten Kontrollgerät 6 auf einmal alle benötigten Werte, die nachfolgend zeitlich zu filtern sind, übermittelt werden.

Somit ist es nicht erforderlich, dass sämtliche von den Sensoren 10, 12, 14 erfassten Werte über die Kommunikationsverbindung 8 übertragen werden müssen, da durch Vorsehen der Vorverarbeitung lediglich eine vergleichsweise geringe Anzahl an Werten zu übertragen ist. Falls stattdessen sämtliche Werte übertragen werden müssten, könnte dies nur stückweise geschehen. Ferner wird durch das Verfahren eine Latenz der zu übertragenden Werte reduziert, so dass alle ausgewählten örtlich gefilterten Werte früher ankommen. Die empfangenen Werte können von dem zweiten Kontrollgerät 6 mit geringerer Verzögerung verarbeitet werden. Somit kann ein Höhenprofil des Untergrunds auch bei einer Fahrt des Kraftfahrzeugs zeitnah und komplett erfasst werden, bevor das Kraftfahrzeug einen zu analysierenden Bereich des Untergrunds bereits überfahren hat. Durch die im Rahmen des Verfahrens vorgesehene Maßnahme kann eine nutzbare Weite eines Vorausschauens des Höhenprofils des Untergrunds vergrößert werden.

Ferner kann für die von dem ersten Kontrollgerät 4 zu dem zweiten Kontrollgerät 6 zu übermittelnden Werte eine deterministische Übertragung durchgeführt werden, wobei genau bekannt sein sollte, wieviel Zeit zur Übertragung eines Werts benötigt wird, wobei eine durch die Übertragung bedingte Latenz konstant oder deterministisch festgelegt ist. Wenn die Latenz konstant und bekannt ist, kann ein damit verbundener Zeitverlust durch eine Vorausschau kompensiert werden.

## Patentansprüche

1. Verfahren zum Kontrollieren von mindestens einem Aktor (16, 18) eines Fahrwerks eines Kraftfahrzeugs, bei dem von mindestens einem Sensor (10, 12, 14) des Kraftfahrzeugs Werte von mindestens einer Messgröße zum Erfassen eines Umfelds des Kraftfahrzeugs ermittelt werden, wobei die ermittelten Werte vorbearbeitet werden, wobei nur die zum Kontrollieren des mindestens einen Aktors (16, 18) benötigten Werte von einem sensorzugeordneten Kontrollgerät (4) an ein aktorzugeordnetes Kontrollgerät (6) übermittelt und von dem aktorzugeordneten Kontrollgerät (6) zeitlich gefiltert werden, und wobei von dem aktorzugeordneten Kontrollgerät (6) aus den zeitlich gefilterten Werten Stellsignale für den mindestens einen Aktor (16, 18) bereitgestellt werden,
**dadurch gekennzeichnet,**
**dass** die von dem mindestens einen Sensor (10, 12, 14) ermittelten Werte in einem ersten zeitlichen Takt verarbeitet und von dem sensorzugeordneten Kontrollgerät (4) in einem zweiten zeitlichen Takt an das aktorzugeordnete Kontrollgerät (6) übermittelt werden, wobei der zweite zeitliche Takt schneller als der erste zeitlichen Takt ist.

2. Verfahren nach Anspruch 1, bei dem die von dem mindestens einen Sensor (10, 12, 14) ermittelten Werte örtlich gefiltert werden.

3. Verfahren nach Anspruch 1 oder 2, bei dem die von dem mindestens einen Sensor (10, 12, 14) ermittelten Werte von dem sensorzugeordneten Kontrollgerät (4) vorverarbeitet werden.

4. Verfahren nach einen der voranstehenden Ansprüche, bei dem die von dem mindestens einen Sensor (10, 12, 14) ermittelten Werte von dem mindestens einen Sensor (10, 12, 14) vorverarbeitet werden.

5. Verfahren nach einem der voranstehenden Ansprüche, bei dem nach einer örtlichen Filterung aus den gefilterten Werten der mindestens einen Messgröße jene Werte ausgewählt werden, die zur Berechnung der Stellgröße notwendig sind.

6. System zum Kontrollieren von mindestens einem Aktor (16, 18) eines Fahrwerks eines Kraftfahrzeugs, wobei das System (2) ein sensorzugeordnetes Kontrollgerät (4) und ein aktorzugeordnetes Kontrollgerät (6) aufweist, bei dem von mindestens einem Sensor (10, 12, 14) des Kraftfahrzeugs Werte von mindestens einer Messgröße zum Erfassen eines Umfelds des Kraftfahrzeugs zu ermitteln sind, wobei die ermittelten Werte vorzubearbeiten sind, wobei nur die zum Kontrollieren des mindestens einen Aktors (16, 18) benötigten Werte von dem sensorzugeordneten Kontrollgerät (4) an das aktorzugeordnete Kontrollgerät (6) zu übermitteln und von dem aktorzugeordneten Kontrollgerät (6) zeitlich zu filtern sind, und wobei von dem aktorzugeordneten Kontrollgerät (6) aus den zeitlich gefilterten Werten Stellsignale für den mindestens einen Aktor (16, 18) bereitzustellen sind,
**dadurch gekennzeichnet,**
**dass** die von dem mindestens einen Sensor (10, 12, 14) ermittelten Werte in einem ersten zeitlichen Takt zu verarbeiten sind und von dem sensorzugeordneten Kontrollgerät (4) in einem zweiten zeitlichen Takt an das aktorzugeordnete Kontrollgerät (6) zu übermitteln sind, wobei der zweite zeitliche Takt schneller als der erste zeitlichen Takt ist.

7. System nach Anspruch 6, bei dem das sensorzugeordnete Kontrollgerät (6) dazu ausgebildet ist, die von dem mindestens einen Sensor (10, 12, 16) ermittelten Werte vorzuverarbeiten.

8. System nach Anspruch 6 oder 7, das den mindestens einen Sensor (10, 12, 14) aufweist, der dazu ausgebildet ist, Werte der mindestens einen Messgrößen zu dem Umfeld des Kraftfahrzeugs zu erfassen.

9. System nach einem der Ansprüche 6 bis 8, bei dem der mindestens eine Sensor (10, 12, 14) dazu ausgebildet ist, als die mindestens eine Messgröße ein Höhenprofil einer von dem Kraftfahrzeug befahrenen Straße zu erfassen.

10. System nach einem der Ansprüche 6 bis 9, das eine Kommunikationsverbindung (8) aufweist, über die das sensorzugeordnete Kontrollgerät (4) und das aktorzugeordnete Kontrollgerät (6) miteinander verbunden sind.

## Claims

1. Method of controlling at least one actuator (16, 18) of a chassis of a motor vehicle, wherein values of at least one measurement variable for determining the surroundings of the motor vehicle are determined by at least one sensor (10, 12, 14) of the motor vehicle, wherein the determined values are preprocessed, wherein only those values that are necessary for controlling the at least one actuator (16, 18) are transmitted from a sensor-associated control device (4) to an actuator-associated control device (6) and are temporally filtered by the actuator-associated control device (6), and wherein corrective signals for the at least one actuator (16, 18) are provided by the actuator-associated control device (6) from the temporally filtered values,
**characterised in that**
the values determined by the at least one sensor (10, 12, 14) are processed in a first time cycle and are transmitted from the sensor-associated control device (4) in a second time cycle to the actuator-associated control device (6), wherein the second time cycle is faster than the first time cycle.

2. Method according to claim 1, wherein the values determined by the at least one sensor (10, 12, 14) are locally filtered.

3. Method according to claim 1 or 2, wherein the values determined by the at least one sensor (10, 12, 14) are preprocessed by the sensor-associated control device (4).

4. Method according to any of the preceding claims, wherein the values determined by the at least one sensor (10, 12, 14) are preprocessed by the at least one sensor (10, 12, 14).

5. Method according to any of the preceding claims, wherein after local filtering from the filtered values of the at least one measurement variable those values are selected that are necessary for calculating the corrective variable.

6. System for controlling at least one actuator (16, 18) of a chassis of a motor vehicle, wherein the system (2) comprises a sensor-associated control device (4) and an actuator-assigned control device (6), in which values of at least one measurement variable for detecting the surroundings of the motor vehicle are determined by at least one sensor (10, 12, 14) of the motor vehicle, wherein the determined values need to be preprocessed, wherein only those values that are necessary for controlling the at least one actuator (16, 18) are transmitted from the sensor-associated control device (4) to the actuator-associated control device (6) and are temporally filtered by the actuator-associated control device (6), and wherein corrective signals for the at least one actuator (16, 18) are provided by the actuator-associated control device (6) from the temporally filtered values,
**characterised in that**
the values determined by the at least one sensor (10, 12, 14) are processed in a first time cycle and are transmitted from the sensor-associated control device (4) in a second time cycle to the actuator-associated control device (6), wherein the second time cycle is faster than the first time cycle.

7. System according to claim 6, wherein the sensor-associated control device (6) is designed to preprocess the values determined by the at least one sensor (10, 12, 16).

8. System according to claim 6 or 7, which comprises the at least one sensor (10, 12, 14) which is configured to determine values of the at least one measurement variable relating to the surroundings of the motor vehicle.

9. System according to any of claims 6 to 8, wherein the at least one sensor (10, 12, 14) is configured to determine an elevation profile of a road travelled along by the motor vehicle as the at least one measurement variable.

10. System according to any of claims 6 to 9, which comprises a communication link (8), by means of which the sensor-associated control device (4) and the actuator-associated control device (6) are connected to one another.

## Revendications

1. Procédé de contrôle d'au moins un actionneur (16, 18) d'une suspension d'un véhicule automobile,
dans lequel des valeurs d'au moins une grandeur de mesure sont déterminées par au moins un capteur (10, 12, 14) du véhicule automobile afin de détecter un environnement du véhicule automobile,
dans lequel les valeurs déterminées sont prétraitées,
dans lequel seules les valeurs nécessaires au contrôle de l'au moins un actionneur (16, 18) sont transmises par un appareil de contrôle (4) associé au capteur à un appareil de contrôle (6) associé à l'actionneur et sont filtrées temporellement par l'appareil de contrôle (6) associé à l'actionneur
et dans lequel des signaux de réglage destinés à l'au moins un actionneur (16, 18) sont fournis par l'appareil de contrôle (6) associé à l'actionneur à partir des valeurs filtrées temporellement,
**caractérisé en ce que** les valeurs déterminées par l'au moins un capteur (10, 12, 14) sont traitées avec une première cadence temporelle et sont transmises par l'appareil de contrôle (4) associé au capteur à l'appareil de contrôle (6) associé à l'actionneur avec une deuxième cadence temporelle, la deuxième cadence temporelle étant plus rapide que la première cadence temporelle.

2. Procédé selon la revendication 1, dans lequel les valeurs déterminées par l'au moins un capteur (10, 12, 14) sont filtrées localement.

3. Procédé selon la revendication 1 ou 2, dans lequel les valeurs déterminées par l'au moins un capteur (10, 12, 14) sont prétraitées par l'appareil de contrôle (4) associé au capteur.

4. Procédé selon l'une quelconque des revendications précédentes, dans lequel les valeurs déterminées par l'au moins un capteur (10, 12, 14) sont prétraitées par l'au moins un capteur (10, 12, 14).

5. Procédé selon l'une quelconque des revendications précédentes, dans lequel, après un filtrage local, on sélectionne parmi les valeurs filtrées de l'au moins une grandeur de mesure les valeurs qui sont nécessaires au calcul de la grandeur de réglage.

6. Système de contrôle d'au moins un actionneur (16, 18) d'une suspension d'un véhicule automobile,
dans lequel le système (2) comporte un appareil de contrôle (4) associé au capteur et un appareil de contrôle (6) associé à l'actionneur,
dans lequel des valeurs d'au moins une grandeur de mesure doivent être déterminées par au moins un capteur (10, 12, 14) du véhicule automobile afin de détecter un environnement du véhicule automobile,
dans lequel les valeurs déterminées doivent être prétraitées,
dans lequel seules les valeurs nécessaires au contrôle de l'au moins un actionneur (16, 18) doivent être transmises par l'appareil de contrôle (4) associé au capteur à l'appareil de contrôle (6) associé à l'actionneur et doivent être filtrées temporellement par l'appareil de contrôle (6) associé à l'actionneur
et dans lequel des signaux de réglage destinés à l'au moins un actionneur (16, 18) doivent être fournis par l'appareil de contrôle (6) associé à l'actionneur à partir des valeurs filtrées temporellement,
**caractérisé en ce que** les valeurs déterminées par l'au moins un capteur (10, 12, 14) doivent être traitées avec une première cadence temporelle et doivent être transmises par l'appareil de contrôle (4) associé au capteur à l'appareil de contrôle (6) associé à l'actionneur avec une deuxième cadence temporelle, la deuxième cadence temporelle étant plus rapide que la première cadence temporelle.

7. Système selon la revendication 6, dans lequel l'appareil de contrôle (6) associé au capteur est conçu pour prétraiter les valeurs déterminées par l'au moins un capteur (10, 12, 16).

8. Système selon la revendication 6 ou 7, qui comporte l'au moins un capteur (10, 12, 14) qui est conçu pour détecter des valeurs de l'au moins une grandeur de mesure concernant l'environnement du véhicule automobile.

9. Système selon l'une quelconque des revendications 6 à 8, dans lequel l'au moins un capteur (10, 12, 14) est conçu pour détecter en tant qu'au moins une grandeur de mesure un profil d'altitude d'une route parcourue par le véhicule automobile.

10. Système selon l'une quelconque des revendications 6 à 9, qui comporte une liaison de communication (8) par l'intermédiaire de laquelle l'appareil de contrôle (4) associé au capteur et l'appareil de contrôle (6) associé à l'actionneur sont reliés l'un à l'autre.
